# EUROPEAN PATENT APPLICATION

(11) **EP 4 755 996 A1**
(43) Date of publication of application: **10.06.2026**
(21) Application number: 24862873.7
(22) Date of filing: 05.09.2024
(51) Int. Cl.: C10M 169/04, C10M 125/22, C10M 129/68, C10M 133/04, C10M 133/16, C10M 133/54, C10M 133/56, C10M 135/06, C10M 137/08, C10M 137/10, F16J 15/16, C10N 30/06, C10N 40/02

(54) **LUBRICATING OIL COMPOSITION**

(30) Priority: 08.09.2023 JP 2023146009
(71) Applicant: ENEOS CORPORATION, Chiyoda-ku Tokyo 100-8162 (JP)
(72) Inventor: SHITARA, Yuji, Tokyo 100-8162 (JP); MATSUOKA, Mayuko, Tokyo 100-8162 (JP); OGATA, Hidetoshi, Tokyo 100-8162 (JP)
(74) Representative: Grünecker Patent- und Rechtsanwälte PartG mbB
(86) International application number: PCT/JP2024/031899
(87) International publication number: WO 2025/053224

(57) **Abstract**

A lubricating oil composition comprising a base oil and at least one friction modifier selected from the group consisting of a fatty acid ester compound, an amine compound, an amide compound, an imide compound, a phosphorus compound, a sulfur compound, and a phosphorus-sulfur compound, and used together with an oil seal containing an inorganic filler.

## Description

### Technical Field

The present invention relates to a lubricating oil composition.

### Background Art

In mechanical systems constituting automobiles and the like, lubricating oil is used for lubricating sliding portions of the mechanical systems, and oil seals are provided for preventing the lubricating oil from leaking from static or dynamic gaps generated in the mechanical systems (see, for example, Patent Literature 1).

### Citation List

### Patent Literature

[Patent Literature 1] Japanese Patent Application Laid-Open No. 2018-84301

### Summary of Invention

### Technical Problem

In recent years, with the increase in sliding speed in mechanical systems, frictional resistance applied to oil seals tends to increase. Since an increase in frictional resistance can cause a decrease in energy efficiency of mechanical systems and deterioration of oil seals due to frictional heat and oil leakage accompanying the deterioration, reduction of frictional resistance is desired. However, according to studies by the present inventors, not all types of oil seals can effectively reduce friction.

Therefore, an aspect of the present invention has an object to provide a lubricating oil composition that exhibits a large friction reduction effect when used together with an oil seal containing an inorganic filler.

### Solution to Problem

The present inventors have studied friction characteristics of a lubricating oil composition used together with an oil seal containing an inorganic filler, and have found that the friction reduction effect (the degree of reduction in the friction coefficient when a friction modifier is added relative to the friction coefficient when only a base oil is used) when a specific friction modifier is added to a base oil becomes large.

The present invention includes the following aspects.
[1] A lubricating oil composition comprising a base oil and at least one friction modifier selected from the group consisting of a fatty acid ester compound, an amine compound, an amide compound, an imide compound, a phosphorus compound, a sulfur compound, and a phosphorus-sulfur compound, and used together with an oil seal containing an inorganic filler.
[2] The lubricating oil composition according to [1], wherein the oil seal further contains a friction modifier.
[3] The lubricating oil composition according to [1] or [2], wherein the oil seal further contains at least one friction modifier selected from the group consisting of a fatty acid ester compound, an amine compound, an amide compound, an imide compound, a phosphorus compound, a sulfur compound, and a phosphorus-sulfur compound.
[4] The lubricating oil composition according to [2], wherein the friction modifier in the lubricating oil composition and the friction modifier in the oil seal are fatty acid ester compounds.
[5] The lubricating oil composition according to any one of [1] to [4], wherein the fatty acid ester compound contains a compound having a hydrocarbon group, an ester group, and a hydroxyl group.
[6] The lubricating oil composition according to any one of [1] to [5], wherein the inorganic filler is an iron-based filler.

### Advantageous Effects of Invention

According to one aspect of the present invention, it is possible to provide a lubricating oil composition that exhibits a large friction reduction effect when used together with an oil seal containing an inorganic filler.

### Description of Embodiments

Hereinafter, embodiments of the present invention will be described in detail. One embodiment of the present invention is a lubricating oil composition containing a base oil and a friction modifier.

Examples of the base oil include hydrocarbon oils and oxygen-containing oils. Examples of the hydrocarbon oils include mineral oils, isoparaffins, alkylbenzenes, alkylnaphthalenes, poly-α-olefins or hydrogenated products thereof, polybutenes or hydrogenated products thereof, and ethylene-α-olefin copolymers. Examples of the oxygen-containing oils include esters and ethers. Examples of the esters include monoesters, diesters, polyol esters, and complex esters. Examples of the ethers include polyalkylene glycols and polyvinyl ethers.

The hydrocarbon oil is preferably a mineral oil or an isoparaffin. Examples of the mineral oil include paraffinic mineral oils (normal paraffins, isoparaffins, etc.), naphthenic mineral oils, aromatic mineral oils, and the like, which are obtained by refining a lubricating oil fraction obtained by subjecting crude oil to atmospheric distillation and/or vacuum distillation by appropriately combining one or more refining treatments such as solvent deasphalting, solvent extraction, hydrocracking, solvent dewaxing, catalytic dewaxing, hydrorefining, sulfuric acid washing, and clay treatment, alone or in combination. The isoparaffin may contain, as a main component, an isoparaffin obtained by hydrocracking and/or hydroisomerizing a paraffin wax component obtained in the dewaxing step or Fischer-Tropsch synthesis.

The oxygen-containing oil is preferably a polyol ester. The polyol ester is an ester of a polyhydric alcohol and a carboxylic acid, and is preferably an ester of a polyhydric alcohol and a fatty acid.

The polyhydric alcohol constituting the polyol ester may be a polyhydric alcohol having 2 to 6 hydroxyl groups. The number of carbon atoms of the polyhydric alcohol may be 4 to 12. Examples of the polyhydric alcohol include hindered alcohols such as neopentyl glycol, trimethylolethane, trimethylolpropane, trimethylolbutane, di-(trimethylolpropane), tri-(trimethylolpropane), pentaerythritol, and dipentaerythritol. The polyhydric alcohol is preferably at least one selected from the group consisting of trimethylolpropane, pentaerythritol, and dipentaerythritol.

The fatty acid constituting the polyol ester may be a saturated fatty acid or an unsaturated fatty acid. In one embodiment, when the polyhydric alcohol is trimethylolpropane, the fatty acid preferably contains an unsaturated fatty acid. In another embodiment, when the polyhydric alcohol is pentaerythritol or dipentaerythritol, the fatty acid preferably contains a saturated fatty acid.

The number of carbon atoms of the unsaturated fatty acid may be 14 or more and may be 20 or less. Examples of the unsaturated fatty acid include physeteric acid, myristoleic acid, palmitoleic acid, heptadecenoic acid, petroselinic acid, elaidic acid, oleic acid, and vaccenic acid. The unsaturated fatty acid preferably contains oleic acid.

The number of carbon atoms of the saturated fatty acid may be preferably 4 or more, and may be preferably 20 or less, more preferably 18 or less, and still more preferably 9 or less. Examples of the saturated fatty acid include butanoic acid, pentanoic acid, hexanoic acid, heptanoic acid, octanoic acid, nonanoic acid, decanoic acid, undecanoic acid, dodecanoic acid, tridecanoic acid, tetradecanoic acid, pentadecanoic acid, hexadecanoic acid, heptadecanoic acid, octadecanoic acid, nonadecanoic acid, and icosanoic acid. These saturated fatty acids may be linear or branched.

In one embodiment, the complex ester may be a complex ester of a polyhydric alcohol, a polyvalent carboxylic acid, and at least one selected from the group consisting of a monovalent carboxylic acid and a monovalent alcohol. Examples of the polyhydric alcohol constituting the complex ester may be the same as the examples of the polyhydric alcohol constituting the polyol ester described above. The polyvalent carboxylic acid constituting the complex ester may be a divalent carboxylic acid. The number of carbon atoms of the divalent carboxylic acid may be 2 or more, preferably 4 or more, and may be 12 or less, preferably 10 or less. Examples of the polyvalent carboxylic acid include succinic acid, adipic acid, azelaic acid, sebacic acid, and the like.

The monovalent carboxylic acid constituting the complex ester may be a fatty acid. Examples of the fatty acid may be the same as the examples of the fatty acid constituting the polyol ester described above. The number of carbon atoms of the monovalent alcohol constituting the complex ester may be 2 or more, preferably 4 or more, and may be 20 or less, preferably 10 or less. Examples of the monovalent alcohol include ethanol, butanol, hexanol, octanol, nonanol, decanol, and the like.

The base oil is classified into API base oil categories of Group I (viscosity index of 80 or more and less than 120, sulfur content exceeding 0.03% by mass and/or saturated content of less than 90% by mass; solvent-refined base oil), Group II (viscosity index of 80 or more and less than 120, sulfur content of 0.03% by mass or less and saturated content of 90% by mass or more: hydrorefined base oil), Group III (viscosity index of 120 or more, sulfur content of 0.03% by mass or less and saturated content of 90% by mass or more: hydrocracked/hydroisomerized oil), Group IV (poly-α-olefin base oil), and Group V (base oils not belonging to any of Groups I to IV).

The base oil may contain, as a main component, at least one selected from the group consisting of base oils classified into any of these groups. The group may preferably be a group consisting of base oils classified into any of Group II, Group III, Group IV, and Group V, may be a group consisting of base oils classified into any of Group III, Group IV, and Group V, and may be a group consisting of base oils classified into Group III or Group IV

As these base oils, a base oil having a saturated content of 90% by mass or more, preferably 94% by mass or more, 97% by mass or more, or 99% by mass or more, and an aromatic content of 10% by mass or less, preferably 6% by mass or less, 3% by mass or less, or 1% by mass or less may be used as a main component, and a base oil having %Cp of 60 or more, 70 or more, 75 or more, or 80 or more, %C_{N} of 40 or less, 30 or less, or 25 or less, and %C_{A} of 5 or less, 3 or less, 1 or less, or 0.1 or less may be used as a main component. Here, %C_{P}, %C_{N}, and %C_{A} (total 100) mean the weight ratios of paraffinic carbon content, naphthenic carbon content, and aromatic carbon content, respectively, to the total carbon content (determined in accordance with ASTM D 3238). The viscosity index of these base oils is preferably 80 or more, and may be 90 or more, 100 or more, 120 or more, 130 or more, 140 or more, or 150 or more. Examples of the base oils classified into Group V include aromatic hydrocarbon base oils such as alkylbenzenes and alkylnaphthalenes, and oxygen-containing base oils such as esters and ethers, with ester-based base oils or ether-based base oils being preferred. The viscosity index of the ester-based base oil or ether-based base oil is preferably 80 or more, and may be 90 or more, 100 or more, 120 or more, 130 or more, 140 or more, or 150 or more.

The kinematic viscosity of the base oil at 40°C may be 3 mm²/s or more, 4 mm²/s or more, or 5 mm²/s or more, and may be 500 mm²/s or less, 300 mm²/s or less, or 100 mm²/s or less. The kinematic viscosity of the base oil at 100°C may be 1 mm²/s or more or 2 mm²/s or more, and may be 100 mm²/s or less or 50 mm²/s or less. The kinematic viscosity in this specification means the kinematic viscosity measured in accordance with JIS K 2283:2000.

The content of the base oil may be 50% by mass or more, 60% by mass or more, 70% by mass or more, 80% by mass or more, or 90% by mass or more, based on the total amount of the lubricating oil composition.

The friction modifier is at least one selected from the group consisting of a fatty acid ester compound, an amine compound, an amide compound, an imide compound, a phosphorus compound, a sulfur compound, and a phosphorus-sulfur compound, and is preferably a fatty acid ester compound. These friction modifiers may be compounds having a hydrocarbon group and a polar group. Examples of the hydrocarbon group include chain hydrocarbon groups, aromatic hydrocarbon groups, alicyclic hydrocarbon groups, and the like. The number of carbon atoms of the hydrocarbon group may be 2 or more, and may be 400 or less, 200 or less, or 40 or less. The hydrocarbon group may be a saturated hydrocarbon group or an unsaturated hydrocarbon group. Examples of the polar group include an ester group, a carboxy group, an amine group, an amide group, an imide group, a phosphoric acid group, and the like. These polar groups can be adsorbed on the surface of the inorganic filler. The friction modifier may be an ashless friction modifier.

The fatty acid ester compound is at least one selected from esters of a fatty acid and a monohydric alcohol or a polyhydric alcohol, and is preferably an ester of a fatty acid and a polyhydric alcohol. The fatty acid ester compound has a hydrocarbon group derived from a fatty acid or an alcohol. The number of carbon atoms of the hydrocarbon group may be 2 or more, preferably 6 or more or 12 or more, and may be 40 or less, preferably 20 or less or 18 or less.

In one embodiment, the fatty acid ester compound may have the hydrocarbon group, an ester group, and a hydroxyl group (that is, may be a partial ester of a fatty acid and a polyhydric alcohol). The fatty acid ester compound may contain 10% by mass or more of a partial ester of a fatty acid and a polyhydric alcohol, and may contain it as a main component (for example, 50% by mass or more, preferably 60% by mass or more, 70% by mass or more, 80% by mass or more, or 90% by mass or more, and 100% by mass or less).

The number of carbon atoms of the fatty acid constituting the fatty acid ester compound may be 2 or more, preferably 6 or more, and may be 30 or less, preferably 20 or less. The fatty acid more preferably may contain a saturated or unsaturated fatty acid having 12 to 18 carbon atoms, and may contain at least one selected from the group consisting of lauric acid, myristic acid, palmitic acid, stearic acid, and oleic acid.

The monohydric alcohol constituting the fatty acid ester compound may be an aliphatic alcohol. The number of carbon atoms of the aliphatic alcohol may be 2 or more, preferably 6 or more, and may be 30 or less, preferably 20 or less. The monohydric alcohol more preferably may contain a saturated or unsaturated aliphatic alcohol having 12 to 18 carbon atoms, and may contain at least one selected from the group consisting of lauryl alcohol, myristyl alcohol, palmityl alcohol, stearyl alcohol, and oleyl alcohol.

The polyhydric alcohol constituting the fatty acid ester compound may have 2 to 6 hydroxyl groups. The number of carbon atoms of the polyhydric alcohol may be 2 or more, preferably 3 or more, and may be 12 or less, preferably 6 or less. The polyhydric alcohol more preferably may contain a polyhydric alcohol having 3 to 6 carbon atoms and 2, 3, or 4 hydroxyl groups, and may contain at least one selected from the group consisting of glycerin, sorbitan, neopentyl glycol, trimethylolpropane, and pentaerythritol.

Specific examples of these fatty acid ester compounds include fatty acid monoesters having a hydrocarbon group with 12 to 18 carbon atoms, such as oleyl oleate and stearyl stearate. Other specific examples of the fatty acid ester compound include polyhydric alcohol fatty acid esters having a hydrocarbon group with 12 to 18 carbon atoms, such as glycerin fatty acid ester, sorbitan fatty acid ester, neopentyl glycol fatty acid ester, trimethylolpropane fatty acid ester, and pentaerythritol fatty acid ester. These polyhydric alcohol fatty acid esters may be partial esters, and more specifically, may be glycerin monooleate, sorbitan monooleate, trimethylolpropane partial decanoate (main components: monoester and diester), pentaerythritol partial oleate (main components: monoester, diester, and triester), and the like. Other specific examples of the fatty acid ester compound include polymethacrylic acid esters having a hydrocarbon group with 1 to 40 carbon atoms.

Examples of the amine compound include alkylamines, alkenylamines, alkylene oxide adducts thereof, alkanolamines, and the like. The alkylamine may be a monoalkylamine, a dialkylamine, or a trialkylamine. The alkenylamine may be a monoalkenylamine, a dialkenylamine, or a trialkenylamine.

The number of carbon atoms of the hydrocarbon group in the alkylamine or alkenylamine may be 1 or more, 6 or more, or 12 or more, and may be 30 or less, 20 or less, or 18 or less. Examples of the alkylamine include stearylamine. Examples of the alkenylamine include oleylamine. Examples of the alkanolamine include N,N-bis(2-hydroxyethyl)stearylamine, oleyldiethanolamine, and the like. Examples of the alkylene oxide adduct include ethylene oxide adducts of alkyl or alkenyl amines.

Examples of the amide compound include oleoyl sarcosine, fatty acid amides, fatty acid monoamides such as oleyl oleic acid monoamide and stearyl oleic acid monoamide, and fatty acid diamides such as ethylene bisstearic acid diamide and ethylene bisoleic acid diamide. The number of carbon atoms of the hydrocarbon group in the amide compound may be 1 or more, 6 or more, or 12 or more, and may be 30 or less, 20 or less, or 18 or less.

Examples of the imide compound include alkyl or alkenyl succinimides and boron adducts thereof. Specific examples thereof include succinimides having a hydrocarbon group with 30 or less carbon atoms, such as oleyl succinimide, and polymeric poly(iso)butenyl succinimide, and boron adducts such as its boric acid-modified products. The number of carbon atoms of the hydrocarbon group in the imide compound may be 1 or more, 6 or more, or 12 or more, and may be 30 or less, 20 or less, or 18 or less. Further, the average number of carbon atoms of the poly(iso)butenyl group in the poly(iso)butenyl succinimide may be 40 or more, 60 or more, or 80 or more, and may be 400 or less, 200 or less, or 150 or less.

The phosphorus compound is a compound containing phosphorus as a constituent element (excluding compounds containing sulfur as a constituent element). Examples of the phosphorus compound include phosphorous acid esters, orthophosphoric acid esters, amine salts of acidic phosphoric acid esters, phosphonic acid esters, phosphinic acid esters, and the like. The phosphorus compound may have a hydrocarbon group. The number of carbon atoms of the hydrocarbon group in the phosphorus compound may be 1 or more, 6 or more, or 12 or more, and may be 30 or less, 20 or less, or 18 or less.

The phosphorus compound is preferably at least one selected from the group consisting of phosphorous acid esters, orthophosphoric acid esters, and amine salts of acidic phosphoric acid esters.

Examples of the phosphorous acid ester include dialkyl hydrogen phosphites, dialkenyl hydrogen phosphites, diaryl hydrogen phosphites, trialkyl phosphites, trialkenyl phosphites, and triaryl phosphites. The phosphorous acid ester is preferably at least one selected from the group consisting of dialkenyl hydrogen phosphites and diaryl hydrogen phosphites.

Examples of the alkyl group in the dialkyl hydrogen phosphite and trialkyl phosphite include butyl group, pentyl group, hexyl group, heptyl group, octyl group, nonyl group, decyl group, undecyl group, and didodecyl group. Examples of the alkenyl group in the dialkenyl hydrogen phosphite and trialkenyl phosphite include oleyl group. Examples of the aryl group in the diaryl hydrogen phosphite and triaryl phosphite include phenyl group and cresyl group.

Examples of the orthophosphoric acid ester include trialkyl phosphates, trialkenyl phosphates, and triaryl phosphates. Examples of the alkyl group in the trialkyl phosphate include butyl group, pentyl group, hexyl group, heptyl group, octyl group, nonyl group, decyl group, undecyl group, dodecyl group, decyl group, tetradecyl group, pentadecyl group, hexadecyl group, heptadecyl group, and octadecyl group. Examples of the alkenyl group in the trialkenyl phosphate include oleyl group. Examples of the aryl group in the triaryl phosphate include phenyl group, cresyl group, ethylphenyl group, butylphenyl group, and xylenyl group. The orthophosphoric acid ester is preferably a triaryl phosphate, and more preferably tricresyl phosphate.

Examples of the acidic phosphoric acid ester in the amine salt of the acidic phosphoric acid ester include monoalkyl acid phosphates, monoalkenyl acid phosphates, dialkyl acid phosphates, and dialkenyl acid phosphates.

Examples of the alkyl group in the monoalkyl acid phosphate and dialkyl acid phosphate include butyl group, pentyl group, hexyl group, heptyl group, octyl group, nonyl group, decyl group, undecyl group, dodecyl group, tridecyl group, tetradecyl group, pentadecyl group, hexadecyl group, heptadecyl group, and octadecyl group. Examples of the alkenyl group in the monoalkenyl acid phosphate and dialkenyl acid phosphate include oleyl group.

Examples of the amine in the amine salt of the acidic phosphoric acid ester include monoalkylamines, dialkylamines, and trialkylamines. Examples of the alkyl group in these amines include methyl group, ethyl group, propyl group, butyl group, pentyl group, hexyl group, heptyl group, and octyl group.

The sulfur compound is a compound containing sulfur as a constituent element (excluding compounds containing phosphorus as a constituent element). Examples of the sulfur compound include sulfurized olefins, sulfurized fats and oils, sulfurized esters, thiazoles, thiadiazoles, dithiocarbamates, sulfides, and the like. The sulfur compound may have a hydrocarbon group. The number of carbon atoms of the hydrocarbon group in the sulfur compound may be 1 or more, 6 or more, and may be 30 or less, 20 or less, or 18 or less.

The sulfur compound is preferably sulfides. The sulfides may be a monosulfide or a polysulfide. Examples of the sulfides include dialkyl sulfides. The dialkyl sulfide is preferably a dialkyl polysulfide. The number of carbon atoms of the alkyl group in the dialkyl sulfide (dialkyl polysulfide) may be 1 or more, preferably 4 or more or 6 or more, and may be 12 or less, preferably 10 or less. Further, the sulfur compound may be dithiocarbamates. Specific examples thereof include dialkyl dithiocarbamic acid esters and the like. The number of carbon atoms of the alkyl group in the dialkyl dithiocarbamates may be 1 or more, preferably 4 or more or 6 or more, and may be 12 or less, preferably 10 or less.

The phosphorus-sulfur compound is a compound containing phosphorus and sulfur as constituent elements. Examples of the phosphorus-sulfur compound include thiophosphoric acid esters or derivatives thereof having 1 to 3, preferably 1 or 2, sulfur atoms. The number of carbon atoms of the hydrocarbon group in the phosphorus-sulfur compound may be 1 or more, 4 or more, or 6 or more, and may be 30 or less, 20 or less, or 18 or less. Specific examples of the phosphorus-sulfur compound include phosphorothionates such as triphenyl phosphorothionate, dialkyldithiophosphoric acids, dialkyldithiophosphorylated carboxylic acids or esters thereof, such as 3-diisobutoxyphosphinothioylsulfanyl-2-methylpropanoic acid or esters thereof, and the like.

The content of the friction modifier may be 0.01% by mass or more, 0.05% by mass or more, or 0.1% by mass or more, and may be 10% by mass or less, 5% by mass or less, or 3% by mass or less, based on the total amount of the lubricating oil composition.

The lubricating oil composition may further contain other additives other than the friction modifier. Examples of the other additives include antioxidants, acid scavengers, metal deactivators, viscosity index improvers, pour point depressants, and detergent dispersants. The total content of the additives may be 0.1% by mass or more, 0.5% by mass or more, or 1% by mass or more, and may be 5% by mass or less, 4% by mass or less, or 3% by mass or less, based on the total amount of the lubricating oil composition.

The kinematic viscosity of the lubricating oil composition at 40°C may be 3 mm²/s or more, 4 mm²/s or more, or 5 mm²/s or more, and may be 500 mm²/s or less, 300 mm²/s or less, or 100 mm²/s or less. The kinematic viscosity of the lubricating oil composition at 100°C may be 1 mm²/s or more or 2 mm²/s or more, and may be 100 mm²/s or less or 50 mm²/s or less.

The lubricating oil composition is used together with an oil seal (seal member) containing an inorganic filler. More specifically, in one embodiment, the lubricating oil composition is used in an oil/seal lubrication system comprising an oil seal (seal member) containing an inorganic filler and a sliding member that moves relatively to the oil seal (seal member) and contacts the oil seal (seal member) via the lubricating oil composition. Thereby, the lubricating oil composition is interposed between the oil seal (seal member) and the sliding member to reduce friction.

This oil/seal lubrication system is suitably applied to rotating shafts and hydraulic cylinders of various industrial machines such as automobiles, electric vehicles, motorcycles, bicycles, aircraft, railway vehicles, construction machines, agricultural machines, hydraulic machines, compression machines, robots, turbines, semiconductor manufacturing equipment, information electronic equipment, OA equipment, household electrical appliances, drones, gear elements, bearings, and other mechanical elements. For example, the higher the rotational speed of the rotating shaft, the more the durability of the oil seal (seal member), the lubricating oil composition, and the rotating shaft is enhanced with energy saving due to low friction and heat generation suppression, so the lubricating oil composition according to the present embodiment is particularly preferably applied to an oil/seal lubrication system equipped with such a high-speed rotating shaft. In the present embodiment, application to a rotating shaft has been described as an example, but in another embodiment, the oil/seal lubrication system can also be applied to shock absorbers, hydraulic cylinders, and the like of the mechanical elements.

The lubricating oil composition according to the present embodiment can be used as various lubricating oils and greases such as various engine oils (gasoline engine oil, diesel engine oil, gas engine oil, marine engine oil), turbine oil, automatic transmission oil, manual transmission oil, continuously variable transmission oil, final reduction gear oil, EV drive oil, e-axle oil, gear oil, compressor oil, vacuum pump oil, refrigerator oil, hydraulic fluid for construction machinery, hydraulic fluid for agricultural machinery, hydraulic fluid for shock absorbers, oil for food machinery, bearing oil, and grease.

As the inorganic filler, from the viewpoint of availability and adsorptivity with the ashless friction modifier, metal oxides, metal hydroxides, or silicate minerals are preferred, iron(III) oxide, chromium(III) oxide, titanium dioxide, aluminum hydroxide, silica, wollastonite, or talc is preferred, iron(III) oxide, chromium(III) oxide, titanium dioxide, aluminum hydroxide, or wollastonite is more preferred, and iron(III) oxide, chromium(III) oxide, titanium dioxide, or aluminum hydroxide is still more preferred. From the viewpoint of obtaining a particularly remarkable low-friction effect by the friction modifier, it is preferably an iron-based filler, and more preferably a filler composed of iron(III) oxide.

The content of the inorganic filler is preferably 10 parts by mass or more, more preferably 20 parts by mass or more, still more preferably 30 parts by mass or more, particularly preferably 50 parts by mass or more, and is preferably 300 parts by mass or less, more preferably 250 parts by mass or less, still more preferably 200 parts by mass or less, particularly preferably 150 parts by mass or less, relative to 100 parts by mass of the rubber component in the oil seal.

In one embodiment, the oil seal may be a vulcanized molded product (also called a crosslinked molded product) of a rubber composition containing a rubber component and an inorganic filler. In other words, the oil seal may further contain a rubber component (vulcanized (crosslinked) rubber) in addition to the inorganic filler. The oil seal is obtained by subjecting the rubber composition to, for example, heat pressing (primary vulcanization) at 160 to 200°C for 3 to 30 minutes, and, if necessary, secondary vulcanization at 150 to 250°C for 0.5 to 24 hours.

The type of the rubber component is not particularly limited. Examples of the rubber component include natural rubber, styrenebutadiene rubber, butadiene rubber, chloroprene rubber, acrylonitrile-butadiene rubber (nitrile rubber, NBR), hydrogenated nitrile rubber, isoprene rubber, butyl rubber, ethylene-propylene rubber, ethylene-propylene-diene rubber (EPDM), acrylic rubber (ACM), fluororubber (FKM), silicone rubber, and the like. The rubber component is preferably at least one selected from the group consisting of fluororubber (FKM), acrylonitrile-butadiene rubber (nitrile rubber, NBR), silicone rubber, and acrylic rubber (ACM).

Examples of the fluororubber include polyol-vulcanizable fluororubber and peroxide-crosslinkable fluororubber. The fluororubber is preferably a polyol-vulcanizable fluororubber.

Examples of the polyol-vulcanizable fluororubber include homopolymers and copolymers (for example, alternating copolymers) of fluorine-containing monomers such as vinylidene fluoride, hexafluoropropene, pentafluoropropene, trifluoroethylene, trifluorochloroethylene, tetrafluoroethylene, vinyl fluoride, perfluoroacrylic acid ester, perfluoroalkyl acrylate, perfluoro(methyl vinyl ether), perfluoro(ethyl vinyl ether), and perfluoro(propyl vinyl ether), or copolymers of these fluorine-containing monomers with propylene. The polyol-vulcanizable fluororubber is preferably a vinylidene fluoride-hexafluoropropene copolymer, a vinylidene fluoride-hexafluoropropene-tetrafluoroethylene copolymer, or a tetrafluoroethylene-propylene copolymer. Commercially available polyol-vulcanizable fluororubbers may be used as they are.

Examples of the peroxide-crosslinkable fluororubber include fluorine-containing elastomers containing iodine and/or bromine in the molecule as crosslinking sites. The fluorine content in the peroxide-crosslinkable fluororubber may be 63 to 71% by weight. The Mooney viscosity ML₁₊₁₀ (121°C) of the peroxide-crosslinkable fluororubber may be 20 to 100.

The introduction of iodine groups and/or bromine groups that enable peroxide crosslinking of fluororubber can be performed by a copolymerization reaction in the presence of a saturated or unsaturated compound containing iodine groups and/or bromine groups.

When the side chain of the fluororubber contains bromine groups and/or iodine groups, for example, crosslinking site-forming monomers such as perfluoro(2-bromoethyl vinyl ether), 3,3,4,4-tetrafluoro-4-bromo-1-butene, 2-bromo-1,1-difluoroethylene, bromotrifluoroethylene, perfluoro(2-iodoethyl vinyl ether), and iodotrifluoroethylene can be copolymerized with the above fluorine-containing monomers.

When the terminal of the fluororubber contains iodine groups and/or bromine groups, terminal halogenated fluoroalkylene compounds represented by the formula: X¹CₙF₂ₙX² (X¹: F, Br, or I, X²: Br or I, n: an integer of 1 to 12) are used. As the terminal halogenated fluoroalkylene compound, a compound in which n is 1 to 6 is preferred from the viewpoint of balance between reactivity and handling. Specifically, copolymers containing iodine groups and/or bromine groups are preferably used by copolymerizing terminal halogenated fluoroalkylene compounds such as 1-bromoperfluoroethane, 1-bromoperfluoropropane, 1-bromoperfluorobutane, 1-bromoperfluoropentane, 1-bromoperfluorohexane, 1-iodoperfluoroethane, 1-iodoperfluoropropane, 1-iodoperfluorobutane, 1-iodoperfluoropentane, and 1-iodoperfluorohexane with the above fluorine-containing monomers.

When X¹ and X² are each I or Br, crosslinking sites are introduced at the terminals of the fluororubber. Examples of compounds in which X¹ and X² are each I or Br include 1-bromo-2-iodotetrafluoroethane, 1-bromo-3-iodoperfluoropropane, 1-bromo-4-iodoperfluorobutane, 2-bromo-3-iodoperfluorobutane, monobromomonoiodoperfluoropentane, monobromomonoiodoperfluoro-n-hexane, 1,2-dibromoperfluoroethane, 1,3-dibromoperfluoropropane, 1,4-dibromoperfluorobutane, 1,5-dibromoperfluoropentane, 1,6-dibromoperfluorohexane, 1,2-diiodoperfluoroethane, 1,3-diiodoperfluoropropane, 1,4-diiodoperfluorobutane, 1,5-diiodoperfluoropentane, and 1,6-diiodoperfluorohexane.

The peroxide-crosslinkable fluororubber is preferably a copolymer elastomer as follows.

· Fluororubber obtained by introducing iodine groups and/or bromine groups into a copolymer elastomer having a copolymer composition of about 50 to 80 mol% vinylidene fluoride, about 15 to 50 mol% hexafluoropropene, and about 30 to 0 mol% tetrafluoroethylene As such fluororubbers, commercially available products such as Viton GAL200S, GBL200S, GBL600S, GF200S, GF600S manufactured by DuPont; Tecnoflon P457, P757, P459, P952 manufactured by Solvay Solexis; and Daiel G952, G901, G902, G912, G801 manufactured by Daikin can be used.

· Fluororubber obtained by introducing iodine groups and/or bromine groups into a copolymer elastomer having a copolymer composition of about 50 to 85 mol% vinylidene fluoride, about 5 to 50 mol% perfluorovinyl ether represented by the formula: CF₂=CFORf (Rf: a perfluoroalkyl group having 1 to 10 carbon atoms (preferably a perfluoromethyl group) or a perfluorooxyalkyl group having 1 to 10 carbon atoms and having one or more ether bonds in the carbon chain), and about 50 to 0 mol% tetrafluoroethylene
As such fluororubbers, commercially available products such as Viton GLT200S, GLT600S, GBLT200S, GBLT600S, GFLT200S, GFLT600S manufactured by DuPont, Tecnoflon PL455, PL855, PL557, PL458, PL958 manufactured by Solvay Solexis, and Daiel LT302, LT301 manufactured by Daikin can be used.

The rubber composition may further contain a vulcanizing agent (crosslinking agent). Examples of the vulcanizing agent (crosslinking agent) include polyols, organic peroxides, and the like. When the fluororubber is a polyol-vulcanizable fluororubber, a polyol is preferably used. When the fluororubber is a peroxide-crosslinkable fluororubber, an organic peroxide is preferably used.

Examples of the polyol include 2,2-bis(4-hydroxyphenyl)propane [bisphenol A], 2,2-bis(4-hydroxyphenyl)perfluoropropane [bisphenol AF], bis(4-hydroxyphenyl)sulfone [bisphenol S], 2,2-bis(4-hydroxyphenyl)methane [bisphenol F], bisphenol A-bis(diphenyl phosphate), 4,4'-dihydroxydiphenyl, 2,2-bis(4-hydroxyphenyl)butane, and the like. The polyol is preferably bisphenol A or bisphenol AF. These polyols may be in the form of alkali metal salts or alkaline earth metal salts.

The content of the polyol may be 2 parts by mass or more, preferably 2.5 parts by mass or more, and may be 20 parts by mass or less, preferably 15 parts by mass or less, relative to 100 parts by mass of the polyol-vulcanizable fluororubber.

The polyol may be used in combination with a vulcanization accelerator. That is, the rubber composition may further contain a vulcanization accelerator. The vulcanization accelerator may be a quaternary onium salt which is a quaternary phosphonium salt or a quaternary ammonium salt, and is preferably a quaternary phosphonium salt. The content of the quaternary onium salt may be 0.5 parts by mass or more, preferably 1 part by mass or more, and may be 10 parts by mass or less, preferably 5 parts by mass or less, relative to 100 parts by mass of the polyol-vulcanizable fluororubber.

The quaternary phosphonium salt is a compound represented by the formula: [PR¹R²R³R⁴]⁺X⁻.

In the formula, R¹ to R⁴ are each independently an alkyl group, an alkoxyl group, an aryl group, an alkylaryl group, an aralkyl group, or a polyoxyalkylene group having 1 to 25 carbon atoms, and X⁻ is Cl⁻, Br⁻, I⁻, HSO4⁻, H₂PO4⁻, RCOO⁻, ROSO2⁻, or CO₃²⁻. Two to three of R¹ to R⁴ may form a ring structure together with P.

Examples of the quaternary phosphonium salt include tetraphenylphosphonium chloride, benzyltriphenylphosphonium bromide, benzyltriphenylphosphonium chloride, triphenylmethoxymethylphosphonium chloride, triphenylmethylcarbonylmethylphosphonium chloride, triphenylethoxycarbonylmethylphosphonium chloride, trioctylbenzylphosphonium chloride, trioctylmethylphosphonium chloride, trioctylethylphosphonium acetate, tetraoctylphosphonium chloride, trioctylethylphosphonium dimethyl phosphate, and the like. The quaternary phosphonium salt may be a polyhydroxy aromatic compound-quaternary phosphonium compound equimolar molecular compound as described in JP-A-61-12741.

The quaternary ammonium salt is a compound represented by the formula: [NR¹R²R³R⁴]⁺X⁻. In the formula, R¹ to R⁴ and X⁻ have the same meanings as R¹ to R⁴ and X⁻ in the above quaternary phosphonium salt. Examples of the quaternary ammonium salt include 1-alkylpyridinium salts, 5-aralkyl-1,5-diazabicyclo[4,3,0]-5-nonenium salts, 8-aralkyl-1,8-diazabicyclo[5,4,0]-7-undecenium salts, and the like.

Examples of the organic peroxide include dicumyl peroxide, cumene hydroperoxide, p-methane hydroperoxide, 2,5-dimethylhexane-2,5-dihydroperoxide, di-tert-butyl peroxide, benzoyl peroxide, m-toluyl peroxide, 2,5-dimethyl-2,5-di(tert-butylperoxy)hexane, 2,5-dimethyl-2,5-di(tert-butylperoxy)hexyne-3, 1,3-di(tert-butylperoxyisopropyl)benzene, 2,5-dimethyl-2,5-dibenzoylperoxyhexane, (1,1,3,3-tetramethylbutylperoxy)2-ethylhexanoate, tert-butylperoxybenzoate, tert-butylperoxylaurate, di(tert-butylperoxy)adipate, di(2-ethoxyethylperoxy)dicarbonate, bis-(4-tert-butylcyclohexylperoxy)dicarbonate, and the like.

The content of the organic peroxide may be 0.5 parts by mass or more, preferably 1 part by mass or more, and may be 10 parts by mass or less, preferably 5 parts by mass or less, relative to 100 parts by mass of the peroxide-crosslinkable fluororubber.

The organic peroxide is preferably used in combination with a polyfunctional unsaturated compound from the viewpoint of improving the mechanical strength, compression set, and the like of the oil seal. Examples of the polyfunctional unsaturated compound include tri(meth)allyl isocyanurate, tri(meth)allyl cyanurate, triallyl trimellitate, N,N'-m-phenylenebismaleimide, diallyl phthalate, tris(diallylamine)-s-triazine, triallyl phosphite, ethylene glycol di(meth)acrylate, diethylene glycol di(meth)acrylate, neopentyl glycol di(meth)acrylate, trimethylolpropane tri(meth)acrylate, 1,3-polybutadiene, and the like. Here, (meth)allyl means allyl or methallyl. (Meth)acrylate means acrylate or methacrylate.

The content of the polyfunctional unsaturated compound may be 0.1 parts by mass or more, preferably 0.5 parts by mass or more, and may be 20 parts by mass or less, preferably 10 parts by mass or less, relative to 100 parts by mass of the peroxide-crosslinkable fluororubber.

The oil seal preferably further contains a friction modifier. The friction modifier is preferably an ashless friction modifier, more preferably at least one selected from the group consisting of a fatty acid ester compound, an amine compound, an amide compound, an imide compound, a phosphorus compound, a sulfur compound, and a phosphorus-sulfur compound, and still more preferably a fatty acid ester compound. In particular, it is preferable that both the lubricating oil composition and the oil seal contain a fatty acid ester compound. The details of each friction modifier are the same as those described as the friction modifier contained in the lubricating oil composition.

The content of the friction modifier is preferably 0.01 parts by mass or more, more preferably 0.1 parts by mass or more, still more preferably 1 part by mass or more, and is preferably 20 parts by mass or less, more preferably 15 parts by mass or less, still more preferably 10 parts by mass or less, relative to 100 parts by mass of the rubber component in the oil seal.

The oil seal may further contain other components. Examples of the other components include various additives generally used in the field of rubber compositions, such as ashless friction modifiers (details will be described later), anti-aging agents, plasticizers, crosslinking agents, crosslinking accelerators, acid acceptors, and processing aids.

The rubber composition is obtained by kneading the above-mentioned components using a kneader, an open roll, or the like. The oil seal is obtained by forming the obtained rubber composition into a ribbon-shaped or pellet-shaped preformed product using an extruder or the like as necessary, and then appropriately performing molding and vulcanization. When the oil seal contains an inorganic filler and a friction modifier, the friction modifier and the inorganic filler may be added to the rubber component separately, or the friction modifier may be adsorbed on the surface of the inorganic filler in advance, and then the treated inorganic filler may be added to the rubber component. Examples

Hereinafter, the present invention will be described more specifically based on examples, but the present invention is not limited to the examples.

### (Preparation of Oil Seal 1)

FKM (fluororubber, Tecnoflon (registered trademark) P757 manufactured by Solvay) was used as a rubber component, and 75 parts by mass of iron(III) oxide (Brown #601 manufactured by Rezinocolor Industry Co., Ltd.) as an inorganic filler and 5 parts by mass of a fatty acid ester compound (glycerin monooleate) as a friction modifier were used relative to 100 parts by mass of FKM, kneaded with a kneader and an open roll, and molded at 180°C for 6 minutes to prepare an oil seal 1 of 40×40×2 mm.

### (Preparation of Oil Seal 2)

Oil seal 2 was prepared in the same manner as oil seal 1, except that iron(III) oxide and the fatty acid ester compound were not used.

### (Preparation of Lubricating Oil Composition)

A lubricating oil composition was prepared by adding any of the following friction modifiers to a base oil (Group III mineral oil, kinematic viscosity at 40°C: 32 mm²/s, kinematic viscosity at 100°C: 6 mm²/s, viscosity index: 134, sulfur content: less than 1 mass ppm, saturated content: 99.5% by mass or more, aromatic content: 0.5% or less, %Cₚ: 79.2, %C_{N}: 20.8, %C_{A}: 0.0). Tables 1 to 3 show the types of friction modifiers used in each example and comparative example. In the tables, the numerical values in parentheses written together with the type of friction modifier indicate the content (% by mass) of the friction modifier based on the total amount of the lubricating oil composition, and "none" means that no friction modifier was added to the lubricating oil composition.
Fatty acid ester compound (glycerin monooleate)
Phosphorus compound 1 (diphenyl hydrogen phosphite)
Phosphorus compound 2 (dioleyl hydrogen phosphite)
Phosphorus compound 3 (tricresyl phosphate)
Phosphorus compound 4 (amine salt of oleyl acid phosphate ester)
Phosphorus-sulfur compound (3-diisobutoxyphosphinothioylsulfanyl-2-methylpropanoic acid)
Amine compound (oleylamine)
Amide compound (oleoyl sarcosine)
Sulfur compound (dioctyl polysulfide)
Imide compound (boron adduct of polybutenyl succinimide, average carbon number of polybutenyl group: 96)
Ether compound (glycerin oleyl ether)
Alcohol compound (oleyl alcohol)

### (Evaluation of Friction Reduction Effect)

The friction coefficient was measured under the following conditions using an MTM (Mini Traction Machine) tester (manufactured by PCS Instruments).
· Ball: 1/2 inch steel ball
· Disk: Any of oil seals 1 to 4 (40×40×2 mm)
· Load: 10 N
· Slip ratio: 200% (complete slip)
· Average speed: 0.1 m/s
· Oil temperature: 25°C

The measurement was performed three times for each combination of the oil seal and the lubricating oil composition shown in Tables 1 to 3, and the average value of the friction coefficients obtained in the three measurements was calculated.

The friction reduction effect was evaluated by a relative value when the friction coefficient measured using a reference oil (Reference Example 1-1) consisting of only the base oil for oil seal 1 was set to 100. The smaller this relative value, the greater the friction reduction effect. The results (relative values) are shown in Tables 1 to 3.

**[Table 1]**

| | Example 1-1 | Example 1-2 | Example 1-3 | Example 1-4 | Example 1-5 |
|---|---|---|---|---|---|
| Oil seal | 1 | | | | |
| Type of friction modifier (content) | Fatty acid ester (1) | Fatty acid ester (0.5) | Phosphorus 1 (1) | Phosphorus 2 (1) | Phosphorus -sulfur (1) |
| Relative value of friction coefficient | 79 | 83 | 88 | 83 | 88 |

**[Table 2]**

| | Example 1-6 | Example 1-7 | Comparative Example 1-1 | Comparative Example 1-2 |
|---|---|---|---|---|
| Oil seal | 1 | | | |
| Type of friction modifier (content) | Amide (1) | Imide (1) | Ether (1) | Alcohol (1) |
| Relative value of friction coefficient | 85 | 87 | 93 | 90 |

**[Table 3]**

| | Reference Example 1-1 | Reference Example 1-2 | Reference Example 1-3 |
|---|---|---|---|
| Oil seal | 1 | 2 | |
| Type of friction modifier (content) | None | None | Fatty acid ester (1) |
| Relative value of friction coefficient | 100 | 129 | 119 |

### (Preparation of Oil Seal 3)

Oil seal 3 was prepared in the same manner as oil seal 1, except that the fatty acid ester compound was not used.

### (Preparation of Lubricating Oil Composition)

A lubricating oil composition was prepared in the same manner as above. Tables 4 to 6 show the types of friction modifiers used in each example and comparative example. In the tables, the numerical values in parentheses written together with the type of friction modifier indicate the content (% by mass) of the friction modifier based on the total amount of the lubricating oil composition, and "none" means that no friction modifier was added to the lubricating oil composition.

### (Evaluation of Friction Reduction Effect)

The friction coefficient was measured in the same manner as above. The measurement was performed three times for each combination of the oil seal and the lubricating oil composition shown in Tables 4 to 6, and the average value of the friction coefficients obtained in the three measurements was calculated.

The friction reduction effect was evaluated by a relative value when the friction coefficient measured using a reference oil (Reference Example 2-1) consisting of only the base oil for oil seal 3 was set to 100. The smaller this relative value, the greater the friction reduction effect. The results (relative values) are shown in Tables 4 to 6.

**[Table 4]**

| | Example 2-1 | Example 2-2 | Example 2-3 | Example 2-4 | Example 2-5 | Example 2-6 |
|---|---|---|---|---|---|---|
| Oil seal | 3 | | | | | |
| Type of friction modifier (content) | Fatty acid ester (1) | Phosphorus 1 (1) | Phosphorus 2 (1) | Phosphorus 3 (1) | Phosphorus 4 (1) | Phosphorus -sulfur (1) |
| Relative value of friction coefficient | 83 | 85 | 83 | 85 | 87 | 80 |

**[Table 5]**

| | Example 2-7 | Example 2-8 | Example 2-9 | Example 2-10 | Comparative Example 2-1 | Comparative Example 2-2 |
|---|---|---|---|---|---|---|
| Oil seal | 3 | | | | | |
| Type of friction modifier (content) | Amine (1) | Amide (1) | Sulfur (1) | Imide (1) | Ether (1) | Alcohol (1) |
| Relative value of friction coefficient | 77 | 81 | 81 | 85 | 96 | 93 |

**[Table 6]**

| | Reference Example 2-1 | Reference Example 2-2 | Reference Example 2-3 |
|---|---|---|---|
| Oil seal | 3 | 2 | |
| Type of friction modifier (content) | None | None | Fatty acid ester (1) |
| Relative value of friction coefficient | 100 | 117 | 109 |

As described above, by adding a fatty acid ester compound, an amine compound, an amide compound, an imide compound, a phosphorus compound, a sulfur compound, or a phosphorus-sulfur compound to the base oil for oil seals 1 and 3 containing iron oxide as an inorganic filler, the relative value of the friction coefficient became smaller compared to, for example, the case where an ether compound or an alcohol compound was added to the base oil, and it was found that a large friction reduction effect was obtained.

### (Preparation of Lubricating Oil Composition)

A lubricating oil composition was prepared by adding any of the above friction modifiers to a base oil (Group V ester, trimethylolpropane trioleate, kinematic viscosity at 40°C: 47.7 mm²/s, kinematic viscosity at 100°C: 9.5 mm²/s, viscosity index: 189, sulfur content: less than 1 mass ppm). Table 7 shows the types of friction modifiers used in each example and comparative example. In the table, the numerical values in parentheses written together with the type of friction modifier indicate the content (% by mass) of the friction modifier based on the total amount of the lubricating oil composition, and "none" means that no friction modifier was added to the lubricating oil composition.

### (Evaluation of Friction Reduction Effect)

The friction coefficient was measured in the same manner as above. The measurement was performed three times for each combination of the oil seal and the lubricating oil composition shown in Table 7, and the average value of the friction coefficients obtained in the three measurements was calculated.

The friction reduction effect was evaluated by a relative value when the friction coefficient measured using a reference oil (Reference Example 3-3) consisting of only the base oil for oil seal 2 was set to 100. The smaller this relative value, the greater the friction reduction effect. The results (relative values) are shown in Table 7.

**[Table 7]**

| | Example 3-1 | Example 3-2 | Reference Example 3-1 | Reference Example 3-2 | Reference Example 3-3 |
|---|---|---|---|---|---|
| Oil seal | 1 | 3 | 1 | 3 | 2 |
| Type of friction modifier (content) | Fatty acid ester (1) | | None | | |
| Relative value of friction coefficient | 75 | 83 | 79 | 85 | 100 |

## Claims

1. A lubricating oil composition comprising:
a base oil; and
at least one friction modifier selected from the group consisting of a fatty acid ester compound, an amine compound, an amide compound, an imide compound, a phosphorus compound, a sulfur compound, and a phosphorus-sulfur compound,
wherein the lubricating oil composition is used together with an oil seal containing an inorganic filler.

2. The lubricating oil composition according to claim 1, wherein the oil seal further contains a friction modifier.

3. The lubricating oil composition according to claim 1, wherein the oil seal further contains at least one friction modifier selected from the group consisting of a fatty acid ester compound, an amine compound, an amide compound, an imide compound, a phosphorus compound, a sulfur compound, and a phosphorus-sulfur compound.

4. The lubricating oil composition according to claim 2, wherein the friction modifier in the lubricating oil composition and the friction modifier in the oil seal are fatty acid ester compounds.

5. The lubricating oil composition according to claim 4, wherein the fatty acid ester compound contains a compound having a hydrocarbon group, an ester group, and a hydroxyl group.

6. The lubricating oil composition according to any one of claims 1 to 5, wherein the inorganic filler is an iron-based filler.
